# EUROPEAN PATENT APPLICATION

(11) **EP 4 368 429 A1**
(43) Date of publication of application: **15.05.2024**
(21) Application number: 23207707.3
(22) Date of filing: 03.11.2023
(51) Int. Cl.: B60K 1/04, B60K 1/00

(54) **WORK VEHICLE**

(30) Priority: 11.11.2022 JP 2022181287
(71) Applicant: Kubota Corporation, Osaka-shi, Osaka 556-8601 (JP)
(72) Inventor: BESSHO, Hiroki, SAKAI-SHI, OSAKA, 5900908 (JP); IKEMOTO, Shotaro, SAKAI-SHI, OSAKA, 5900908 (JP)
(74) Representative: Cabinet Beau de Loménie

(57) **Abstract**

A work vehicle according to the present invention includes a seat frame (33). A body frame includes a first frame section (21), a second frame section (22) extending upward from a rear portion of the first frame section (21), and a third frame section (23) extending rearward from an upper portion of the second frame section (22). An up-down section (33a) of the seat frame (33) is attachable to the first frame section (21) and removable therefrom, and a front-rear section (33b) of the seat frame (33) is attachable to the second frame section (22) or the third frame section (23) and removable therefrom. A battery (42) is between the up-down section (33a) and the second frame section (22) and between the front-rear section (33b) and the first frame section (21).

## Description

### BACKGROUND OF THE INVENTION

### 1. Field of the Invention

The present invention relates to an electric work vehicle that obtains motive power for travel with use of a motor and a hybrid work vehicle that obtains motive power for travel with use of an engine and a motor.

### 2. Description of the Related Art

There is a work vehicle including a body frame that has a structure like that disclosed in JP 2013-52035A.

A body frame disclosed in JP 2013-52035A includes a first frame section, a second frame section extending upward from a rear portion of the first frame section, and a third frame section extending rearward from an upper portion of the second frame section, and a seating section is supported by a portion of the body frame between a front wheel and a rear wheel.

A seat frame is coupled to the first frame section and the upper portion of the second frame section of the body frame, and a seat is supported by the seat frame.

JP 2013-52035A discloses an example of related art.

### SUMMARY OF THE INVENTION

In a case where a work vehicle including a body frame like that disclosed in JP 2013-52035A is configured as an electric work vehicle or a hybrid work vehicle, a relatively large battery needs to be installed in the work vehicle, and accordingly, consideration needs to be given to securing a space for disposing the battery and attachability of the battery.

An object of the present invention is to configure a work vehicle in such a manner that a battery can be appropriately installed on a body frame.

A work vehicle according to the present invention includes: a body frame; a front wheel for travel supported by a front portion of the body frame; a rear wheel for travel supported by a rear portion of the body frame; a seating section supported by a portion of the body frame between the front wheel and the rear wheel; at least one seat frame supporting a seat in the seating section and including an up-down section extending along an up-down direction and a front-rear section extending rearward from an upper portion of the up-down section; a battery; and a motor configured to output motive power for travel with use of electric power supplied from the battery, wherein the body frame includes: a first frame section under the seating section; a second frame section extending upward from a rear portion of the first frame section; and a third frame section extending rearward from an upper portion of the second frame section, the up-down section of the at least one seat frame is attachable to the first frame section and removable therefrom, the front-rear section of the at least one seat frame is attachable to the second frame section or the third frame section and removable therefrom, and the battery is between the up-down section and the second frame section and between the front-rear section and the first frame section.

According to the present invention, the body frame includes: the first frame section under the seating section; the second frame section extending upward from the rear portion of the first frame section; and the third frame section extending rearward from the upper portion of the second frame section.

The up-down section of the at least one seat frame supporting the seat is attached to the first frame section, and the front-rear section of the at least one seat frame is attached to the second frame section (the third frame section).

With this configuration, a relatively large space can be secured between the up-down section of the seat frame and the second frame section and between the front-rear section of the seat frame and the first frame section. Therefore, even a relatively large battery can be installed on the body frame without difficulty by effectively using the above-described space, and travel performance of the work vehicle can be improved.

According to the present invention, when the battery is to be attached to the body frame during manufacture of the work vehicle or when the battery is to be replaced, the seat frame (the up-down section and the front-rear section) can be removed from the first frame section and the second frame section (the third frame section).

Therefore, the seat frame does not hinder attachment of the battery to the body frame and removal of the battery from the body frame, and accordingly, the battery can be easily attached to the body frame and easily removed from the body frame, and productivity of the work vehicle can be increased and maintenance of the work vehicle can be facilitated.

In the present invention, it is preferable that the at least one seat frame includes a right seat frame and a left seat frame, a right end portion of the battery is outward of the right seat frame in a lateral direction, and a left end portion of the battery is outward of the left seat frame in the lateral direction.

According to this aspect of the present invention, the work vehicle includes the right seat frame and the left seat frame, and accordingly, the seat can be supported with sufficient strength, and it is possible to support a seat, such as a bench seat, having a large width in the lateral direction without difficulty.

According to this aspect of the present invention, the right end portion of the battery is outward of the right seat frame in the lateral direction, the left end portion of the battery is outward of the left seat frame in the lateral direction, and the battery that is long in the left-right direction is installed on the body frame. Therefore, even a relatively large battery can be installed on the body frame without difficulty, and the travel performance of the work vehicle can be improved.

In the present invention, it is preferable that the seat includes a backrest section attachable to the body frame and removable therefrom.

According to this aspect of the present invention, when the battery is to be attached to the body frame during the manufacture of the work vehicle or when the battery is to be replaced, it is possible to remove the backrest section of the seat from the body frame in addition to removing the seat frame (the up-down section and the front-rear section) from the first frame section and the second frame section (the third frame section).

Therefore, the seat frame and the backrest section of the seat do not hinder attachment of the battery to the body frame and removal of the battery from the body frame, and accordingly, the battery can be easily attached to the body frame and easily removed from the body frame, and the productivity of the work vehicle can be increased and maintenance of the work vehicle can be facilitated.

### BRIEF DESCRIPTION OF THE DRAWINGS

FIG. 1 is a left side view of a work vehicle.
FIG. 2 is a plan view of the work vehicle.
FIG. 3 is a left side view showing a body frame, a ROPS frame, a seat frame, a battery, and the like.
FIG. 4 is a plan view showing the body frame, the seat frame, the battery, and the like.
FIG. 5 is an exploded left side view showing the body frame, the ROPS frame, the seat frame, the battery, and the like.
FIG. 6 is a cross-sectional plan view of a sensor support and a hitch attachment section.

### DETAILED DESCRIPTION OF PREFERRED EMBODIMENTS

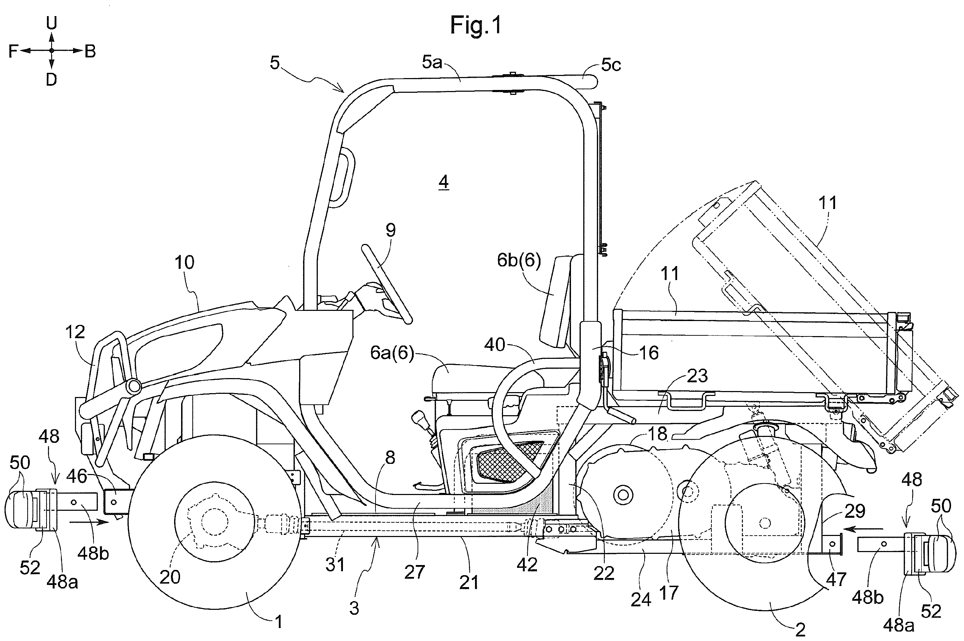

FIGS. 1 to 6 show a multipurpose electric work vehicle, which is an example of a work vehicle. In FIGS. 1 to 6, F indicates the forward direction, B indicates the backward direction, U indicates the upward direction, D indicates the downward direction, R indicates the rightward direction, and L indicates the leftward direction.

### Overall configuration of work vehicle

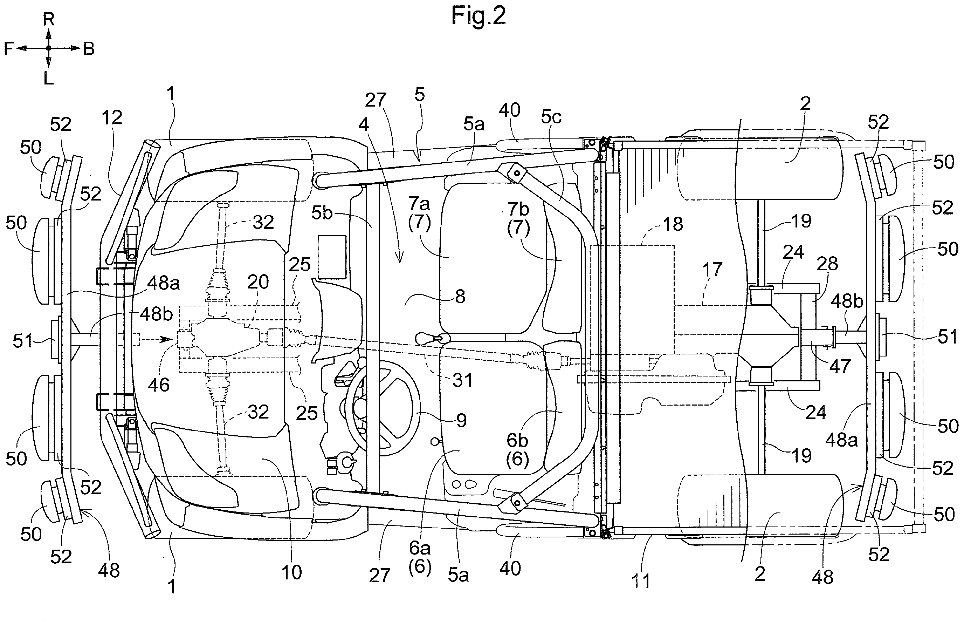

As shown in FIGS. 1 and 2, the work vehicle includes a body frame 3. Right and left front wheels 1 for travel (corresponding to travel devices) are supported by a front portion of the body frame 3, right and left rear wheels 2 for travel (corresponding to travel devices) are supported by a rear portion of the body frame 3, and the body frame 3 is supported by the front wheels 1 and the rear wheels 2.

A seating section 4 in which a driver and an operator ride is supported by a portion of the body frame 3 between the front wheels 1 and the rear wheels 2, and the seating section 4 is surrounded by a ROPS frame 5. The seating section 4 includes a driver's seat 6 (corresponding to a seat), a passenger seat 7 (corresponding to a seat), a floor 8, a steering handle 9 for steering the front wheels 1, and the like.

The work vehicle includes a hood 10 in front of the seating section 4 and a cargo bed 11 behind the seating section 4. The cargo bed 11 can be raised and lowered between a use position shown by solid lines in FIG. 1 and a dump position (see two-dot chain lines in FIG. 1) at which a front portion of the cargo bed 11 is raised with a lower rear portion of the cargo bed 11 serving as the fulcrum.

### Configuration of body frame

As shown in FIGS. 1 to 4, the body frame 3 includes first frame sections 21, second frame sections 22, third frame sections 23, fourth frame sections 24, fifth frame sections 25, sixth frame sections 26, and seventh frame sections 27, for example.

The first frame sections 21 extend along a front-rear direction under the seating section 4 (the floor 8). The second frame sections 22 are coupled to rear portions of the first frame sections 21 and extend upward from the rear portions of the first frame sections 21. The third frame sections 23 are coupled to upper portions of the second frame sections 22 and extend rearward from the upper portions of the second frame sections 22.

The fourth frame sections 24 are coupled to the rear portions of the first frame sections 21 and extend rearward from the rear portions of the first frame sections 21. A frame 28 extending along a left-right direction is coupled to rear portions of the right and left fourth frame sections 24. Frames 29 extending along an up-down direction are each coupled to a rear portion of one of the third frame sections 23 and a rear portion of a corresponding one of the fourth frame sections 24.

The fifth frame sections 25 are coupled to front portions of the first frame sections 21 and extend forward from the front portions of the first frame sections 21. Frames 30 extending along the up-down direction are coupled to the front portions of the first frame sections 21 and extend upward from the front portions of the first frame sections 21.

The sixth frame sections 26 are coupled to upper portions of the frames 30 and extend forward from the upper portions of the frames 30. A front guard 12 extends between front portions of the fifth frame sections 25 and front portions of the sixth frame sections 26, and is coupled to the front portions of the fifth and sixth frame sections 25 and 26.

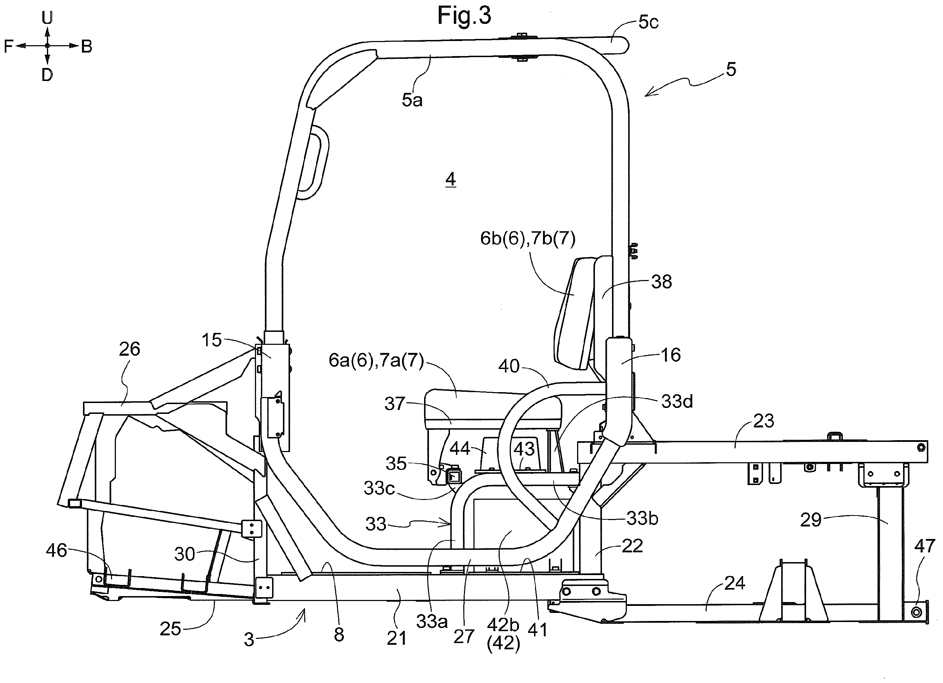

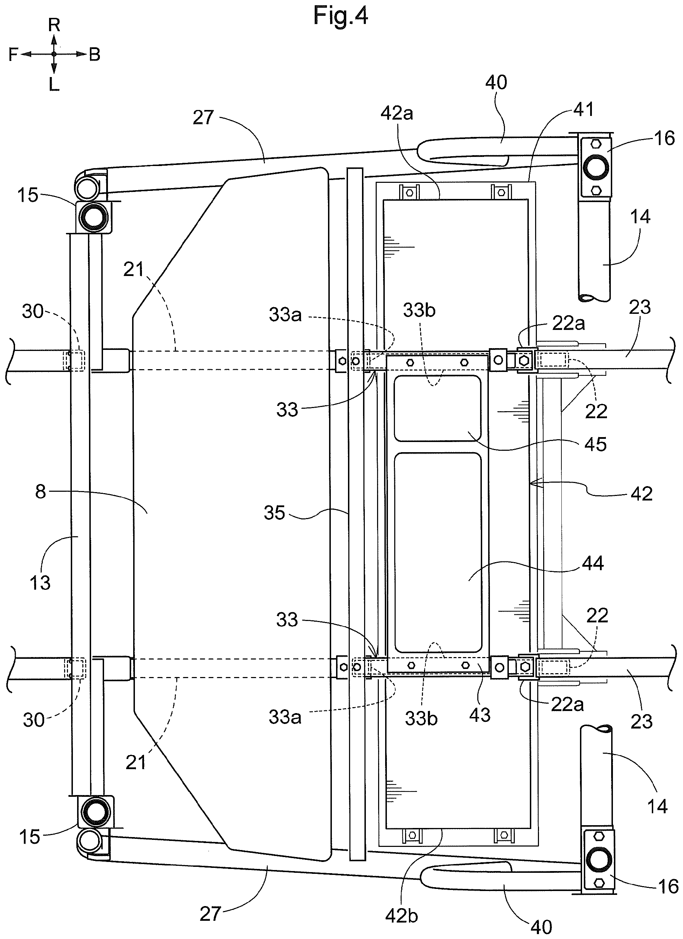

As shown in FIGS. 3 and 4, right and left front support sections 15 are coupled to the upper portions of the frames 30, and a frame 13 extending along the left-right direction is coupled to the right and left front support sections 15. A frame 14 extending along the left-right direction is coupled to front portions of the right and left third frame sections 23, and right and left rear support sections 16 are coupled to a right portion and a left portion of the frame 14.

The seventh frame sections 27 each have a U-shape (a channel shape) in a side view, upper front portions of the seventh frame sections 27 are coupled to the front support sections 15, and upper rear portions of the seventh frame sections 27 are coupled to the rear support sections 16. The floor 8 extends between the front portions of the first frame sections 21 and lower front portions of the seventh frame sections 27, and is coupled to the front portions of the first frame sections 21 and the lower front portions of the seventh frame sections 27. Right and left side guards 40 each extending from one of the rear support sections 16 to a lower rear portion of a corresponding one of the seventh frame sections 27 are coupled to the rear support sections 16 and the lower rear portions of the seventh frame sections 27.

### Configuration of travel system

As shown in FIGS. 1 and 2, the rear wheels 2 are supported via a suspension mechanism (not shown) by rear portions of the third frame sections 23 and rear portions of the fourth frame sections 24. A transmission case 17 is supported by the fourth frame sections 24, and a motor 18 is coupled to a front portion of the transmission case 17.

An auxiliary transmission (not shown) and a rear wheel differential device (not shown) are provided inside the transmission case 17. Motive power is transmitted from the motor 18 to the auxiliary transmission, subjected to speed change, and transmitted from the rear wheel differential device to the rear wheels 2 via drive shafts 19.

The front wheels 1 are supported via a suspension mechanism (not shown) by the fifth frame sections 25 and the sixth frame sections 26, and a front wheel differential device 20 is supported by the fifth frame sections 25. Motive power diverted from between the auxiliary transmission and the rear wheel differential device in the transmission case 17 is transmitted by a transmission shaft 31 to the front wheel differential device 20, and then transmitted from the front wheel differential device 20 to the front wheels 1 via drive shafts 32.

### Configuration of ROPS frame

As shown in FIGS. 2, 3, and 4, the ROPS frame 5 includes right and left first sections 5a, a second section 5b, and a third section 5c, for example.

The first sections 5a of the ROPS frame 5 each have an inverted U-shape (an inverted channel shape) in a side view. The second section 5b of the ROPS frame 5 extending along the left-right direction is coupled to front portions of the right and left first sections 5a of the ROPS frame 5. The third section 5c of the ROPS frame 5 extending along the left-right direction is coupled to rear portions of the right and left first sections 5a of the ROPS frame 5.

Lower front portions of the first sections 5a of the ROPS frame 5 are coupled to the front support sections 15 with use of bolts (not shown), and lower rear portions of the first sections 5a of the ROPS frame 5 are coupled to the rear support sections 16 with use of bolts (not shown). With this configuration, the ROPS frame 5 is attached to the body frame 3.

The ROPS frame 5 can be removed from the body frame 3 by removing the lower front portions of the first sections 5a of the ROPS frame 5 from the front support sections 15 and removing the lower rear portions of the first sections 5a of the ROPS frame 5 from the rear support sections 16.

### Configuration of seat frames supporting driver's seat and passenger seat

As shown in FIGS. 3, 4, and 5, the work vehicle includes right and left seat frames 33. Each seat frame 33 is formed into an L-shape (an angle shape) by bending a square pipe, and includes an up-down section 33a extending along the up-down direction and a front-rear section 33b extending rearward from an upper portion of the up-down section 33a.

A support section 33c is coupled to the upper portion of the up-down section 33a (a front portion of the front-rear section 33b) of each seat frame 33. A support section 33d is coupled to a rear portion of the front-rear section 33b of each seat frame 33.

An attachment section 21a is provided in the rear portion of each first frame section 21 of the body frame 3, and an attachment section 22a is provided in the upper portion of each second frame section 22 of the body frame 3.

A lower portion of the up-down section 33a of each seat frame 33 is attachable to the attachment section 21a of a corresponding one of the first frame sections 21 with use of a bolt 34 and removable therefrom. A rear portion of the front-rear section 33b of each seat frame 33 is attachable to the attachment section 22a of a corresponding one of the second frame sections 22 with use of a bolt 34 and removable therefrom.

### Attachment state of driver's seat and passenger seat

As shown in FIGS. 3, 4, and 5, the work vehicle includes a support frame 35 having a rectangular pipe shape, and a plurality of fulcrum sections 35a are provided on the support frame 35. The support frame 35 is attachable to the support sections 33c of the seat frames 33 with use of bolts 36 and removable therefrom.

As shown in FIGS. 1 and 2, the driver's seat 6 includes a seat section 6a and a backrest section 6b, which are separate from each other, and the passenger seat 7 includes a seat section 7a and a backrest section 7b, which are separate from each other.

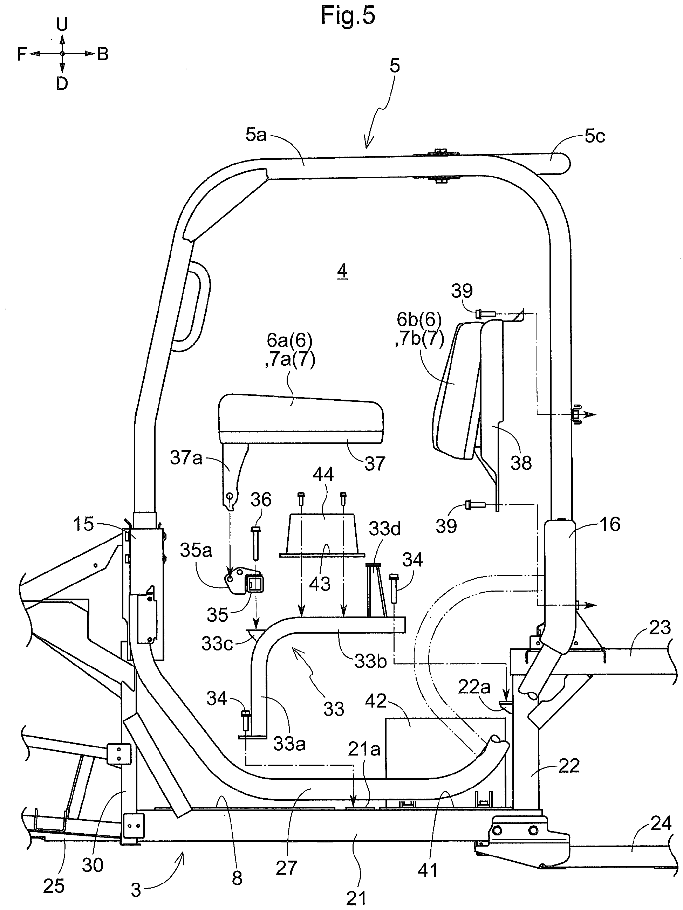

As shown in FIGS. 3 and 5, the work vehicle includes a flat plate-shaped support member 37, and leg sections 37a are provided under a front portion of the support member 37. The seat sections 6a and 7a of the driver's seat 6 and the passenger seat 7 are attached to the support member 37. The leg sections 37a of the support member 37 are attached to the fulcrum sections 35a on the support frame 35 in such a manner as to be swingable about an axis extending along the left-right direction.

The work vehicle includes a flat plate-shaped support member 38, and the backrest sections 6b and 7b of the driver's seat 6 and the passenger seat 7 are attached to the support member 38. The support member 38 is attachable to the right and left first sections 5a of the ROPS frame 5 with use of bolts 39 and removable therefrom.

With the configuration described above, the front portion of the support member 37 is supported via the support frame 35 by the seat frames 33 and a rear portion of the support member 37 is supported by the support sections 3d of the seat frames 33 in a normal use state.

Thus, the seat section 6a of the driver's seat 6 (seat) and the seat section 7a of the passenger seat 7 (seat) are supported by the seat frames 33 and supported by the body frame 3 via the seat frames 33. The backrest section 6b of the driver's seat 6 and the backrest section 7b of the passenger seat 7 are supported by the ROPS frame 5 and supported by the body frame 3 via the ROPS frame 5.

It is possible to open a region above the seat frames 33 by raising the rear portion of the support member 37 upward with the fulcrum sections 35a on the support frame 35 serving as fulcrums. The seat section 6a of the driver's seat 6 (seat) and the seat section 7a of the passenger seat 7 (seat) can be removed from the seat frames 33 by removing the bolts 36 and removing the support frame 35 from the seat frames 33.

The backrest section 6b of the driver's seat 6 and the backrest section 7b of the passenger seat 7 can be removed from the body frame 3 by removing the bolts 39 and removing the support member 38 from the ROPS frame 5.

### Configuration relating to battery and inverter

As shown in FIGS. 3, 4, and 5, a flat plate-shaped support member 41 is coupled to the rear portions of the first frame sections 21 of the body frame 3 along the left-right direction. A battery 42 is attached to the support member 41 with use of bolts (not shown) in such a manner as to be removable from the support member 41 and attachable thereto.

In the state where the battery 42 is attached to the support member 41, the battery 42 is between the up-down section 33a of each seat frame 33 and the second frame sections 22 and between the front-rear section 33b of each seat frame 33 and the first frame sections 21 in a side view.

In a plan view, a right end portion 42a of the battery 42 is outward of the right seat frame 33 in the lateral direction and closer to the center of the body frame 3 in the left-right direction than the right seventh frame section 27 and the right side guard 40 are. The right end portion 42a of the battery 42 overlaps the right seventh frame section 27 and the right side guard 40 in a side view.

In the plan view, a left end portion 42b of the battery 42 is outward of the left seat frame 33 in the lateral direction and closer to the center of the body frame 3 in the left-right direction than the left seventh frame section 27 and the left side guard 40 are. The left end portion 42b of the battery 42 overlaps the left seventh frame section 27 and the left side guard 40 in a side view.

A flat plate-shaped support member 43 is attached to the front-rear sections 33b of the right and left seat frames 33 with use of bolts (not shown) in such a manner as to be removable from the front-rear sections 33b and attachable thereto. An inverter 44 and a control device 45 are attached to the support member 43. The inverter 44 and the control device 45 are between the seat sections 6a and 7a of the driver's seat 6 and the passenger seat 7 (the support member 37) and the battery 42 (the front-rear sections 33b of the seat frames 33) in a side view.

When a driver seating in the driver's seat 6 operates a gear shift pedal (not shown), an operation position of the gear shift pedal is input by the control device 45, and the inverter 44 is operated by the control device 45 based on the operation position of the gear shift pedal. DC power output from the battery 42 is converted into AC power by the inverter 44 and supplied to the motor 18. The motor 18 operates to output motive power for travel, and the motive power for travel is supplied to the front wheels 1 and the rear wheels 2 as described above.

### Maintenance of battery and inverter

As shown in FIGS. 3, 4, and 5, when the rear portion of the support member 37 is raised upward with the fulcrum sections 35a on the support frame 35 serving as fulcrums, the region above the seat frames 33 is opened as described above.

Maintenance of the inverter 44 and the control device 45 can be performed by raising the support member 37. The inverter 44 and the control device 45 can be removed by removing the support member 43 from the seat frames 33. Maintenance of the battery 42 can be performed by raising the support member 37 and removing the inverter 44 and the control device 45.

When the seat section 6a of the driver's seat 6 (seat) and the seat section 7a of the passenger seat 7 (seat) are removed from the seat frames 33 by removing the support frame 35 from the seat frames 33 as described above, the seat frames 33 can be removed from the body frame 3 (the first frame sections 21 and the second frame sections 22) by removing the bolts 34.

When the seat frames 33 are removed from the body frame 3 (the first frame sections 21 and the second frame sections 22), the battery 42 can be removed from the body frame 3 (the support member 41) and attached to the body frame 3 (the support member 41).

In this case, attachment and removal of the battery 42 are facilitated when the support member 38 is removed from the ROPS frame 5 by removing the bolts 39 as described above to remove the backrest section 6b of the driver's seat 6 and the backrest section 7b of the passenger seat 7 from the body frame 3.

Attachment and removal of the battery 42 are further facilitated when the ROPS frame 5 is removed from the body frame 3 by removing the lower front portions of the first sections 5a of the ROPS frame 5 from the front support sections 15 and removing the lower rear portions of the first sections 5a of the ROPS frame 5 from the rear support sections 16 as described above, in addition to removing the backrest section 6b of the driver's seat 6 and the backrest section 7b of the passenger seat 7 from the body frame 3.

### Configuration of hitch attachment section

As shown in FIGS. 1 and 2, a hitch attachment section 46 having a rectangular pipe shape is provided at front end portions of the fifth frame sections 25 of the body frame 3, and a hitch attachment section 47 having a rectangular pipe shape is provided at rear end portions of the fourth frame sections 24 (the frame 28) of the body frame 3.

A work device (not shown) can be attached to a front portion or a rear portion (both the front portion and the rear portion) of the body frame 3 by attaching a hitch (not shown) for attaching the work device to the hitch attachment section 46 or 47 and attaching the work device to the hitch. When the hitch is unnecessary, the hitch can be removed from the hitch attachment section 46 or 47.

When a hitch (not shown) for towing is attached to the rear hitch attachment section 47, a wagon (not shown) can be connected to the hitch and towed by the work vehicle.

When the work vehicle fails to travel on soft ground, the hitch for towing can be attached to the hitch attachment section 46 or 47. By attaching a wire (not shown) or the like to the hitch and pulling the wire or the like with use of another work vehicle (not shown), it is possible to move the work vehicle from the soft ground. When the hitch is unnecessary, the hitch can be removed from the hitch attachment section 46 or 47.

### Configuration of sensor support

As shown in FIGS. 1 and 2, the work vehicle includes sensor supports 48. Each sensor support 48 includes a first section 48a extending along the left-right direction and a second section 48b attached to a center portion of the first section 48a in the left-right direction and extending along the front-rear direction. Obstacle sensors 51 and 52 are supported by the first section 48a.

The second sections 48b of the sensor supports 48 are inserted into the hitch attachment sections 46 and 47, and thus the sensor supports 48 are attached to the hitch attachment sections 46 and 47 and the body frame 3.

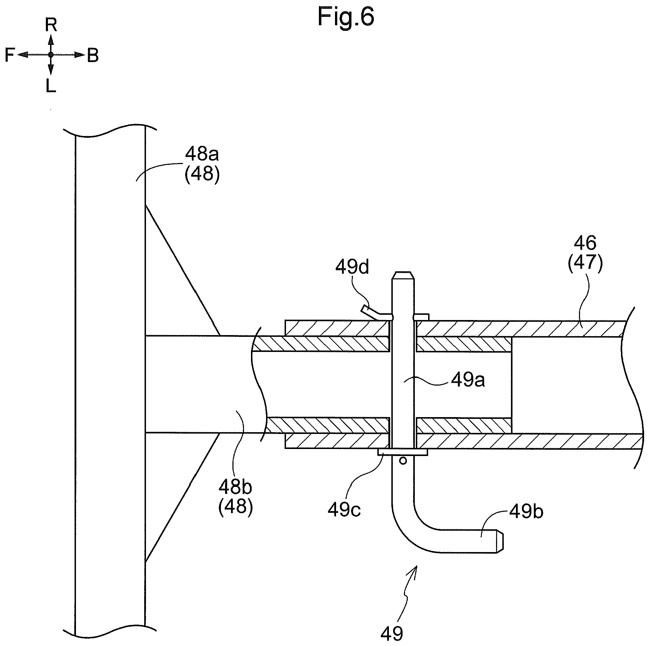

The work vehicle includes fixing members 49, and as shown in FIG. 6, each fixing member 49 includes a body 49a, a handle portion 49b, a receiving portion 49c, and a retainer portion 49d, for example.

The body 49a of each fixing member 49 is formed like a pin. The handle portion 49b to be held by a worker extends from an end portion of the body 49a in a direction intersecting with the body 49a. The receiving portion 49c like a washer is fixed to an intermediate portion of the body 49a. The retainer portion 49d is formed like a beta pin and attachable to an end portion of the body 49a and removable therefrom.

After the second sections 48b of the sensor supports 48 are inserted into the hitch attachment sections 46 and 47, the bodies 49a of the fixing members 49 are inserted into openings in the hitch attachment sections 46 and 47 and openings in the second sections 48b of the sensor supports 48 until the receiving portions 49c of the fixing members 49 abut against the hitch attachment sections 46 and 47, and the retainer portions 49d of the fixing members 49 are attached to the end portions of the bodies 49a. Thus, the sensor supports 48 can be attached and fixed to the hitch attachment sections 46 and 47.

When the retainer portions 49d of the fixing members 49 are removed from the bodies 49a and the fixing members 49 are removed from the hitch attachment sections 46 and 47, the second sections 48b of the sensor supports 48 can be pulled out from the hitch attachment sections 46 and 47 and the sensor supports 48 can be removed from the hitch attachment sections 46 and 47.

### Configuration of obstacle sensors

As shown in FIGS. 1 and 2, an obstacle sensor 51 (corresponding to a first obstacle sensor) is supported by a center portion of the first section 48a of each sensor support 48 in the left-right direction.

Obstacle sensors 52 (corresponding to second obstacle sensors) are supported by portions of the first section 48a of each sensor support 48 on the right side and the left side of the obstacle sensor 51.

The obstacle sensor 51 is configured to detect obstacles with use of infrared rays or ultrasonic waves, and mainly detects obstacles spaced apart from the body frame 3 in front of (or behind) the body frame 3.

Each obstacle sensor 52 is provided with a flat plate-shaped contact body 50, and detects an obstacle in response to the contact body 50 coming into contact with the obstacle. The contact bodies 50 of the obstacle sensors 52 slightly protrude forward (rearward) from the obstacle sensor 51 in a plan view.

In the state where the sensor supports 48 are attached to the hitch attachment sections 46 and 47, the first sections 48a of the sensor supports 48 extend from the right front wheel 1 to the left front wheel 1 and from the right rear wheel 2 to the left rear wheel 2.

When the sensor supports 48 are attached to the hitch attachment sections 46 and 47, right and left portions of the first section 48a of the front sensor support 48 are in front of the right and left front wheels 1. Right and left portions of the first section 48a of the rear sensor support 48 are behind the right and left rear wheels 2.

In the state where the front sensor support 48 is attached to the hitch attachment section 46, the front sensor support 48 (the contact bodies 50 of the obstacle sensors 52) is slightly forward of a front end portion of the front guard 12 in a side view.

In the state where the rear sensor support 48 is attached to the hitch attachment section 47, the rear sensor support 48 (the contact bodies 50 of the obstacle sensors 52) is slightly forward of a rear end portion of the cargo bed 11 in the use state (the state shown by solid lines in FIG. 1) or is substantially at the same position as the rear end portion of the cargo bed 11 in a side view. Therefore, even when the cargo bed 11 is moved to the dump position and soil on the cargo bed 11 is discharged downward, the soil discharged from the cargo bed 11 is unlikely to come into contact with the rear sensor support 48 (the obstacle sensors 51 and 52).

### First Variation of Implementation of the Invention

A configuration is also possible in which one or two or more seat frames 33 are provided between the right and left seat frames 33 so that the work vehicle includes three or four or more seat frames 33.

The rear portion of the front-rear section 33b of each seat frame 33 may be configured to be attachable to the front portion of a corresponding one of the third frame sections 23 with use of a bolt 34 and removable therefrom.

### Second Variation of Implementation of the Invention

A configuration is also possible in which the seat section 6a and the backrest section 6b of the driver's seat 6 and the seat section 7a and the backrest section 7b of the passenger seat 7 are supported by the seat frames 33.

### Third Variation of Implementation of the Invention

The work vehicle may be configured to include two rows of seats and accommodate four people by providing the body frame 3 with the driver's seat 6 and the passenger seat 7 on the front side and rear seats (not shown).

In this case, the battery 42 can be disposed under the rear seats, and the configuration shown in FIGS. 3, 4, and 5 can be adopted for the rear seats. In a case where a sufficient capacity of the battery 42 cannot be secured only with the battery 42 under the rear seats, another battery 42 can also be disposed under the driver's seat 6 and the passenger seat 7.

### Fourth Variation of Implementation of the Invention

The work vehicle may be configured as a two-rear-wheel drive work vehicle in which motive power for travel is supplied from the motor 18 to the rear wheels 2 and is not supplied to the front wheels 1.

Crawler-type travel devices (not shown) may be provided as front travel devices, instead of the front wheels 1. Crawler-type travel devices (not shown) may be provided as rear travel devices, instead of the rear wheels 2. A front wheel 1 and a rear wheel 2 may be replaced with one crawler-type travel device (not shown).

### Industrial Applicability

The present invention is applicable to not only an electric work vehicle that drives a travel device with use of a motor, but also a hybrid work vehicle that drives a travel device with use of an engine and a motor.

### Description of Reference Numerals

- 1: Front wheel
- 2: Rear wheel
- 3: Body frame
- 4: Seating section
- 6: Driver's seat (seat)
- 6b: Backrest section
- 7: Passenger seat (seat)
- 7b: Backrest section
- 18: Motor
- 21: First frame section
- 22: Second frame section
- 23: Third frame section
- 33: Seat frame
- 33a: Up-down section
- 33b: Front-rear section
- 42: Battery
- 42a: Right end portion
- 42b: Left end portion

## Claims

1. A work vehicle comprising:
a body frame (3);
a front wheel (1) for travel supported by a front portion of the body frame (3);
a rear wheel (2) for travel supported by a rear portion of the body frame (3);
a seating section (4) supported by a portion of the body frame (3) between the front wheel (1) and the rear wheel (2);
at least one seat frame (33) supporting a seat (6, 7) in the seating section (4) and including an up-down section (33a) extending along an up-down direction and a front-rear section (33b) extending rearward from an upper portion of the up-down section (33a);
a battery (42); and
a motor (18) configured to output motive power for travel with use of electric power supplied from the battery (42),
wherein the body frame (3) includes:
a first frame section (21) under the seating section (4);
a second frame section (22) extending upward from a rear portion of the first frame section (21); and
a third frame section (23) extending rearward from an upper portion of the second frame section (22),
the up-down section (33a) of the at least one seat frame (33) is attachable to the first frame section (21) and removable therefrom,
the front-rear section (33b) of the at least one seat frame (33) is attachable to the second frame section (22) or the third frame section (23) and removable therefrom, and
the battery (42) is between the up-down section (33a) and the second frame section (22) and between the front-rear section (33b) and the first frame section (21).

2. The work vehicle according to claim 1,
wherein the at least one seat frame includes a right seat frame (33) and a left seat frame (33), and
a right end portion (42a) of the battery (42) is outward of the right seat frame (33) in a lateral direction, and a left end portion (42b) of the battery (42) is outward of the left seat frame (33) in the lateral direction.

3. The work vehicle according to claim 1 or 2,
wherein the seat (6, 7) includes a backrest section (6b, 7b) attachable to the body frame (3) and removable therefrom.
